# EUROPÄISCHE PATENTSCHRIFT

(11) **EP 1 447 570 B1**
(45) Veröffentlichungstag und Bekanntmachung des Hinweises auf die Patenterteilung: **02.07.2008**
(21) Anmeldenummer: 04002999.3
(22) Anmeldetag: 11.02.2004
(51) Int. Cl.: F15B 7/00

(54) **Hydraulisches System**
Hydraulic system
Systeme hydraulique

(30) Priorität: 12.02.2003 DE 10305677
(43) Veröffentlichungstag der Anmeldung: 18.08.2004
(73) Patentinhaber: LuK Lamellen und Kupplungsbau Beteiligungs KG, 77815 Bühl (DE)
(72) Erfinder: Rammhofer, Thomas, 77880 Sasbach (DE); Popp, Udo, 77815 Bühl (DE); Zink, Matthias, 77883 Ottenhöfen (DE)

(56) Entgegenhaltungen:
- EP-A- 0 643 095
- EP-A- 0 754 898
- WO-A-00/77433
- DE-B- 1 165 947
- FR-A- 2 089 897
- GB-A- 1 076 819
- US-A- 4 966 202
- US-A- 4 998 564
- US-A- 5 476 121
- US-A- 5 507 320
- US-A- 5 918 643
- US-A- 6 148 848
- US-A1- 2001 017 163
- US-A1- 2002 119 055

## Beschreibung

Die Erfindung betrifft ein hydraulisches System insbesondere für Kraftfahrzeuge, umfassend einen Geberzylinder, einen Nehmerzylinder und eine diese verbindende Druckmediumsleitung sowie ein Ausrücksystem zur Betätigung mehrerer Reibungskupplungen in einem Antriebsstrang eines Kraftfahrzeuges, umfassend mehrere Gebereinheiten, mehrere Nehmereinheiten und jeweils diese paarweise verbindende Übertragungseinrichtungen, welche aus je mindestens einem Rohr bestehen, in dem jeweils ein Kraftübertragungsmedium geführt ist.

Ein gattungsgemäßes hydraulisches System ist beispielsweise aus der DE 100 49 913 A1 sowie aus der US 2002/0119055 A1 bekannt. Die Druckmediumsleitung verbindet dabei den karosseriefesten Geberzylinder mit dem getriebefesten Nehmerzylinder. Die Druckmediumsleitung wird heutzutage überwiegend aus einem Stahlrohr hergestellt. Zum Ausgleich der Aggregatbewegung von Motor und Getriebe und zur Unterdrückung einer Schwingungsübertragung bzw. Geräuschübertragung enthält die Druckleitung einen Abschnitt mit einem Gummischlauch. Gibt es für einen Fahrzeugtyp eine Ausführung mit Rechts- und Linkslenker, so sind die Leitungen unterschiedlich lang. Beim Rechtslenker kommen so Leitungslängen von 1,5 Meter und mehr zustande. Zur Kostenreduktion wird angestrebt, die Stahl-Gummileitung durch eine Kunststoffleitung zu ersetzen. Möglich ist dies bisher bis zu einer Länge von etwa 700 Millimetern, wobei vor allem die temperaturabhängige Volumenaufnahme der Kunststoffleitung durch deren Dehnung, die zu einer Verschiebung der Koppelpunkte führt, nachteilig ist. In Abhängigkeit von der Leitungslänge werden daher unterschiedliche Wandstärken verwendet. Je größer die Leitungslänge, desto größer die Wandstärke. Nachteilig bei einer größeren Wandstärke ist die größere Steifigkeit der Leitung, die notwendige Flexibilität zum Ausgleich der Aggregatbewegung und die Geräuschübertragung verschlechtern sich. Insbesondere bei Leitungslängen oberhalb von 700 Millimetern werden die zuvor beschriebenen Nachteile so ausgeprägt, dass diese zu einer wesentlichen Komforteinbuße führen können, hier wird das Kunststoffrohr daher derzeit noch mit einer Stahlleitung kombiniert.
Die US 5,918,643 zeigt vorteilhafte Ausgestaltungsbeispiele für Kunststoffleitungen.

Aufgabe der vorliegenden Erfindung ist es daher, die zuvor beschriebenen Nachteile auszugleichen bzw. zu vermindern.

Dieses Problem wird durch ein hydraulisches System insbesondere für Kraftfahrzeuge, umfassend einen Geberzylinder, einen Nehmer-zylinder und eine diese verbindende Druckmediumsleitung gelöst, bei dem die Druckmediumsleitung aus mindestens zwei Abschnitten mit unterschiedlichen Wandstärken besteht. Karosseriefeste Leitungsteile sowie diejenigen getriebefesten Leitungsteile, die selbst nicht flexibel sein müssen, werden dabei aus einem Kunststoffrohr mit relativ großer Wandstärke gefertigt, das sich daher auch bei Beaufschlagung mit dem Betriebsdruck des hydraulischen Systems nur gering aufweitet und so eine hohe hydraulische Steifigkeit besitzt. Bereiche, in denen die Druckmediumsleitung gebogen werden können muss, dies ist insbesondere der Übergang zwischen dem karosseriefesten Leitungsteil und dem getriebefesten Leitungsteil, werden aus einem Kunststoffrohr mit relativ geringer Wandstärke gefertigt, so dass eine relativ geringe Biegesteifigkeit und damit eine leichte Biegbarkeit gewährleistet ist. Unter Abschnitten werden dabei jeweils axial hintereinander angeordnete Rohrleitungsbereiche verstanden. Die Abschnitte bestehen vorzugsweise aus Kunststoff, besonders bevorzugt aus einem einzigen identischen Kunststoff. Dabei kann es sich sowohl um einen Thermoplast als auch einen Duroplast handeln. Vorzugsweise wird ein Thermoplast verwendet. Die Abschnitte sind dabei vorzugsweise einstückig gefertigt, sämtliche Abschnitte der Druckmediumsleitung werden in einem zusammenhängenden bzw. aufeinander folgenden Arbeitsgang gefertigt. Es ist aber auch möglich, unterschiedlich Abschnitte zunächst eigenständig zu fertigen und danach, z.B. durch Ultraschallschweißung, zusammenzufügen. Die Druckmediumsleitung wird vorzugsweise einstückig in einem Extrusionsprozess hergestellt. Durch Eingriff in den Herstellungsprozess, z.B. durch Variation der Abzugsgeschwindigkeit, kann die Wandstärke gezielt beeinflusst werden. Die Anzahl der Abschnitte ist beliebig, beträgt aber mindestens zwei Abschnitte. Je nach Einbausituation können insbesondere Aspekte der vereinfachten Montage der Druckmediumsleitung zusätzliche flexible Abschnitte und Freiheitsgrade notwendig machen, so dass mehr als zwei unterschiedliche Abschnitte verwendet werden können. Bei mehr als zwei unterschiedlichen Abschnitten können sich Bereich dicker und dünner Wandstärke jeweils abwechseln, es können aber auch eine Vielzahl von Abschnitten mit jeweils unterschiedlicher Wandstärke verwendet werden. Die Abstufung der Wandstärke für einzelne Abschnitte ist also beliebig, es können mehr als zwei Wandstärken realisiert werden. Die Wandstärke der Abschnitte und die Abschnittslänge kann gezielt zur Beeinflussung der Volumenaufnahme eingesetzt werden. Ziel ist es dabei, bei einer kurzen Leitung eines Linkslenkerfahrzeuges die gleiche Volumenaufnahme bzw. die gleiche hydraulische Steifigkeit der Druckmediumsleitung zu erreichen wie bei der vergleichsweise langen Druckmediumsleitung bei einem Rechtslenkerfahrzeug. Durch eine gezielte Anordnung der einzelnen Abschnitte kann auch die Schwingungs- bzw. Geräuschübertragung beeinflusst werden. Der Innendurchmesser der Abschnitte ist im Prinzip überall gleich, dadurch wird ein günstiges Strömungsverhalten erreicht. Statt einer einstückig aus Kunststoff gefertigten Druckmediumsleitung mit mehreren Abschnitten können sich auch Abschnitte aus Kunststoff und Abschnitte aus Metall abwechseln. Abschnitte aus Metall können dabei Rillen, Riefen, Umbördelungen, Sicken oder dergleichen an ihren Enden umfassen, so dass diese durch unmittelbares Umgießen mit Kunststoff mit den Kunststoffabschnitten der Leitung verbunden werden können.

Gegen die in hydraulischen Brems- oder Ausrücksystemen verwendeten Fluide sind nur spezielle Gummi- bzw. Kunststoffmaterialien beständig. Eine geeignete Auswahl des Werkstoffes ist somit entscheidend für die Funktion des gesamten hydraulischen Systems. Unbeständigkeiten der ausgewählten Materialien gegenüber dem Fluid führen beispielsweise zu Trübungen des Fluids. Die in üblichen hydraulischen Systemen verwendeten Nachlaufschläuche sind überwiegend aus Gummi gefertigt und deshalb nicht gegen alle Medien beständig. Ein aus Kunststoff gefertigter Wellschlauch hat diese Beständigkeit. Nachteilig sind aus Gummi gefertigte Verbindungselemente des Systems, welche ebenfalls eine begrenzte Beständigkeit gegenüber dem Hydraulikfluid aufweisen.

Der vorliegenden Erfindung liegt daher die weitere Aufgabe zugrunde, eine Druckund/oder Nachlaufleitung für ein hydraulisches System bereitzustellen, die kostengünstig zu fertigen ist und gegenüber den in dem hydraulischen System verwendeten Fluiden beständig ist.

Dies Problem wird durch ein hydraulisches System, insbesondere für Kraftfahrzeuge umfassend einen Geberzylinder, einen Nehmerzylinder und eine diese verbindende Druckmediumsleitung gelöst, bei der der Geberzylinder mit einer Nachlaufleitung verbunden ist, die aus einem Verbundmaterial besteht, das eine innere Schicht aus einem gegenüber Mineralöl und/oder Hydraulikflüssigkeiten in hartem Material aufweist. Die Nachlaufleitung ist in bekannter Weise mit einem Nachlaufbehälter verbunden. Über die Nachlaufleitung und einer entsprechende Nachlaufbohrung oder Nachlaufnuten oder dergleichen des Geberzylinders kann in der entlastenden Stellung des Geberzylinders, einer so genannten Schnüffelstellung, bei der der Druckzylinder des Geberzylinders ein Schnüffelspiel aufweist, Hydraulikfluid aus dem Nachlaufbehälter in das hydraulische System nachlaufen. Unter Verbundmaterial wird dabei jedes Material verstanden, das aus mehreren Schichten besteht. Das gegenüber Mineralöl und/oder Hydraulikflüssigkeit inhärente Material kann vorzugsweise eine PA-Folie sein.

Das Verbundmaterial umfasst vorzugsweise eine Schicht aus einem elastischen Material, welche der Aufnahme von Zug- bzw. aus dem Innendruck des hydraulischen Systems herrührenden Druckkräften dient. Zusätzlich kann das Verbundmaterial eine Schicht aus einem Material mit gegenüber dem elastischen Material hoher Zugfestigkeit umfassen. Das Verbundmaterial kann beispielsweise eine Schicht aus einem Metallgewebe und/oder einem Glasgewebe und/oder einem Kohlefasergewebe und/oder einem Aramidfasergewebe umfassen. Die genannten Gewebe dienen jeweils der Aufnahme von Zugspannungen während das elastische Material, beispielsweise ein Gummi, ein Kunststoff oder dergleichen, zusammen mit dem Gewebe eine diese stabilisierende Matrix bildet. Die Nachlaufleitung besteht vorzugsweise somit aus einem Verbundmaterial mit einer inneren Sperrschicht, einer darüber angeordneten Gummischicht, einem Druckträger und einer äußeren Gummischicht. Die Nachlaufleitung besteht mindestens aber aus einem Verbundmaterial mit einer inneren Sperrschicht und einer äußeren Gummischicht.

Neben den Nachlaufleitungen kann auch die Druckmediumsleitung selbst aus einem Verbundmaterial entsprechend dem der zuvor dargestellten Nachlaufleitung bestehen. Die Materialpaarung bzw. die Geometrien sind dazu auf die Druckverhältnisse einer Druckmediumsleitung abzustimmen. Es sind also entsprechend Materialien hoher Zugfestigkeiten bzw. ausreichend große Wandstärken für die Druckmediumsleitung vorzusehen.

Die vorliegende Erfindung betrifft des Weiteren ein Ausrücksystem zur Betätigung mehrerer Reibungskupplungen in einem Antriebsstrang des Kraftfahrzeuges, umfassend mehrere Gebereinheiten, mehrere Nehmereinheiten und jeweils diese paarweise verbindende Übertragungseinrichtungen, welche mindestens aus einem Rohr bestehen, in dem jeweils ein Übertragungsmedium geführt ist. Das Kraftübertragungsmedium kann Hydraulikflüssigkeit in bekannter Weise sein, es kann sich aber auch um Drahtseilzüge eines Bowdenzuges handeln. Sind bei einem Ausrücksystem mehrere Kupplungen zu betätigen, dies trifft z. B. auf Doppelkupplungsgetriebe zu, so vergrößert sich der Montageaufwand für die Übertragungseinrichtungen. Zwischen jeder Gebereinheit und jeder Nehmereinheit ist jeweils eine Übertragungseinrichtung zu montieren.

Der vorliegenden Erfindung liegt daher das weitere Problem zugrunde, den Montageaufwand bei mehreren Geber-/Nehmereinheiten zu vereinfachen. Dieses Problem wird durch ein Ausrücksystem zur Betätigung von mehreren Reibungskupplungen in einem Antriebsstrang eines Kraftfahrzeuges, umfassend mehrere Gebereinheiten, mehrere Nehmereinheiten und diese jeweils paarweise verbindende Übertragungseinrichtungen, welche aus je mindestens einem Rohr bestehen, indem jeweils ein Kraftübertragungsmedium geführt ist, gelöst, bei dem die Übertragungseinrichtung zumindest teilweise als parallel geführte, miteinander verbundene Rohre ausgeführt sind. Mit zumindest teilweise ist dabei gemeint, dass die Übertragungseinrichtung üblicherweise im Bereich der Geber- bzw. Nehmereinheit nur noch einzeln geführt werden kann, um einen Anschluss an die Gebereinheit bzw. Nehmereinheit zu ermöglichen. Abhängig von der Einbausituation kann es aber vorteilhaft sein, auch die eigentlich zusammengeführten Rohre zwischendurch einmal zu trennen, beispielsweise um den erforderlichen Bauraum einzuschränken oder um zusätzliche zwischengeschaltete Elemente, man denke hier beispielsweise an Kribbelfilter oder dergleichen, einbauen zu können.

Insbesondere bei einer Doppelkupplung ist es vorteilhaft, wenn mindestens zwei Rohre fest miteinander verbunden sind. Sind mehr als zwei Kupplungen miteinander verbunden, so können auch mehr als zwei Rohre miteinander fest verbunden sein. Vorteilhaft ist, wenn mindestens zwei Rohre entlang einer axial verlaufenden Verbindungslinie fest miteinander verbunden sind, dies kann vorzugsweise ein axial verlaufender Steg sein. Der Querschnitt der miteinander verbundenen Rohre ist somit in etwa 8-förmig bzw. ähnelt dem Querschnitt einer Hantel. Der axial verlaufende Steg kann dabei in axialer Richtung durchgehend sein, was bei einem Extrusionsprozess besonders leicht zu fertigen ist, er kann auch altemativ unterbrochen sein, was zu material- und, wenn auch geringen, Gewichtseinsparungen führt.

In einer Ausgestaltung der Erfindung ist vorgesehen, dass die Übertragungseinrichtungen als Druckmediumsleitungen, die Gebereinheiten als Geberzylinder und die Nehmereinheiten als Nehmerzylinder ausgefüllt sind, wobei das Kraftübertragungsmedium ein Fluid ist. Bei dieser Ausgestaltung ist es möglich, die mindestens zwei Rohre koaxial zur führen. Vorteilhaft ist es dabei, wenn der hydraulische Widerstand bzw. der Druckabfall der einzelnen koaxial geführten Rohre in etwa identisch sind. Werden unterschiedlich starke Kupplungen betätigt, so können die Querschnitte der axial geführten Rohre an die jeweils notwendige Kupplungskraft bzw. Fluidmengen angepasst werden.
Im Folgenden werden Ausführungsbeispiele der Erfindung anhand der beiliegenden Zeichnungen erläutert. Dabei zeigen:
- Fig. 1: eine schematische Darstellung eines hydraulischen Systems anhand eines Ausführungsbeispiels einer Kupplungsausrückvorrichtung;
- Fig. 2: eine Skizze eines hydraulischen Systems mit einer Druckmediumsleitung mit zwei Abschnitten;
- Fig. 3: einen Schnitt durch einen Teil einer Druckmediumsleitung;
- Fig. 4: eine Skizze eines hydraulischen Systems mit einer Druckmediumsleitung mit einer Vielzahl von Abschnitten;
- Fig. 5: einen Schnitt durch ein erstes Ausführungsbeispiel einer Druckmediumsleitung;
- Fig. 6: einen Schnitt durch ein zweites Ausführungsbeispiel einer Druckmediumsleitung;
- Fig. 7: einen Schnitt durch ein drittes Ausführungsbeispiel einer Druck mediumsleitung.

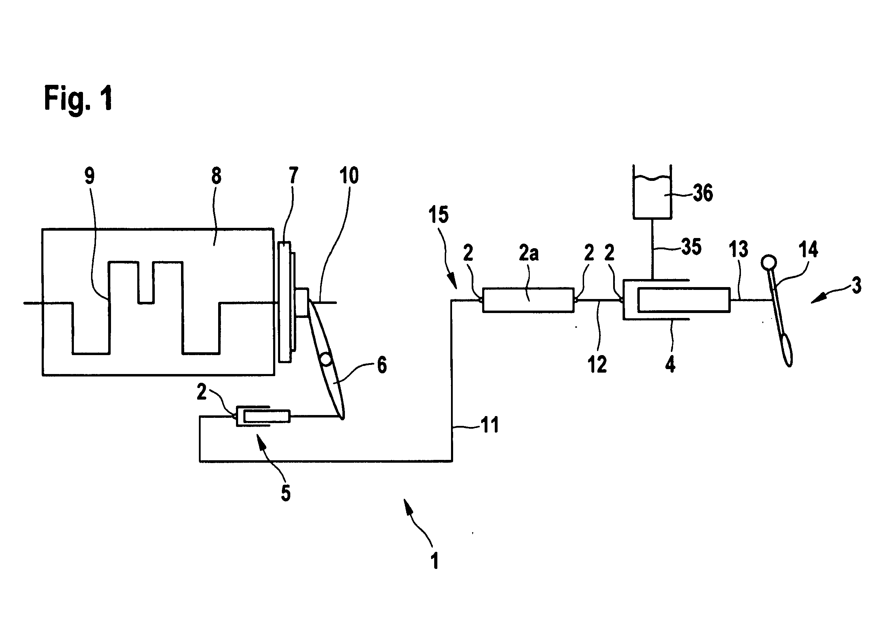

Fig. 1 zeigt in schematischer Darstellung eine mögliche Ausgestaltung eines hydraulischen Systems anhand einer Kupplungsausrückvorrichtung 3 mit einem Geberzylinder 4 und einem Nehmerzylinder 5. Zumindest eine Steckverbindung 2 ist in dem gezeigten Ausführungsbeispiel in eine diese verbindende Druckmediumsleitung 15 eingebaut und kann beispielsweise diese in einen ersten Leitungsstrang 11 und einen zweiten Leitungsstrang 12 voneinander trennen. Es versteht sich, dass in anderen Ausführungsbeispielen die Steckverbindung 2 an dem Geberzylinder 4 oder dem Nehmerzylinder 5 angeordnet sein kann. Weiterhin kann in die Steckverbindung gleichzeitig die Funktion eines Druckbegrenzungsventils (peak torque limiter, PTL) und/oder eines Schwingungsfilters, beispielsweise als so genanntes "Kribbelfilter", integriert sein.

Das Kupplungsausrücksystem 3 betätigt die Kupplung 7 hydraulisch durch Beaufschlagung des Geberzylinders 4 mittels eines Betätigungsgliedes 14, das ein Fußpedal, ein Aktor, beispielsweise ein elektrischer Aktor, oder dergleichen sein kann.

Hierdurch wird mittels einer mechanischen Übertragung 13 Druck im Geberzylinder 4 aufgebaut, der über die Druckmediumsleitung 15 bzw. den zweiten Leitungsstrang 12 die Steckverbindung 2 und den ersten Leitungsstrang 11 einen Druck im Nehmerzylinder 5 aufbaut. Der Nehmerzylinder 5 kann - wie in dem gezeigten Beispiel - konzentrisch um die Getriebeeingangswelle 10 angeordnet sein und sich axial an einem - nicht dargestellten Getriebegehäuse abstützen und die nötige Ausrückkraft über ein Ausrücklager an der Kupplung 7, beziehungsweise an deren Ausrückelementen wie Tellerfeder, aufbringen. Weitere Ausführungsbeispiele können einen Nehmerzylinder 5, der über eine Ausrückmechanik einen Ausrücker betätigt und außerhalb der Kupplungsglocke angeordnet ist, vorsehen, wobei dieser mittels eines in hydraulischer Verbindung mit dem Geberzylinder stehenden im Nehmerzylindergehäuse untergebrachten Kolbens die Ausrückmechanik axial beaufschlagt. Zum Aufbringen der Ausrückkraft ist der Nehmerzylinder jeweils gehäusefest am Getriebegehäuse, das hier nicht näher dargestellt ist, oder an einem anderen gehäusefesten Bauteil angebracht. Die Getriebeeingangswelle 10 überträgt bei geschlossener Kupplung 7 das Drehmoment der Brennkraftmaschine 8 auf ein nicht näher dargestelltes Getriebe und anschließend auf die Antriebsräder eines Kraftfahrzeuges.

Durch die Verbrennungsprozesse in der Brennkraftmaschine 8 erfährt die Kurbelwelle 9 in Abhängigkeit von der Ausgestaltung der Brennkraftmaschine 8, beispielsweise in Abhängigkeit von der Zylinderzahl, ungleichförmige Belastungen, die sich in Axialund/oder Taumelschwingungen dieser äußern und die über die Ausrückmechanik 6 auf den Nehmerzylinder 5, die Druckmediumsleitung 15 auf den Geberzylinder 4 und von dort über die mechanische Übertragung 13 auf das Betätigungsglied 14 übertragen werden. Im Falle eines Kupplungspedals als Betätigungsglied werden diese Schwingungen als unangenehm empfunden. Im Falle eines Aktors als Betätigungsglied 14 kann beispielsweise eine verminderte Regelgenauigkeit oder eine verkürzte Lebensdauer die Folge der Schwingungen sein. Ein beispielsweise in die Steckverbindung 2 integriertes Kribbelfilter ist daher zur Dämpfung in die Druckmediumsleitung 15 eingeschaltet und zur Dämpfung der von der Kurbelwelle 9 eingetragenen Vibrationen abgestimmt. Der Frequenzbereich derartiger Schwingungen liegt typischer Weise bei 50 bis 200 Hz.

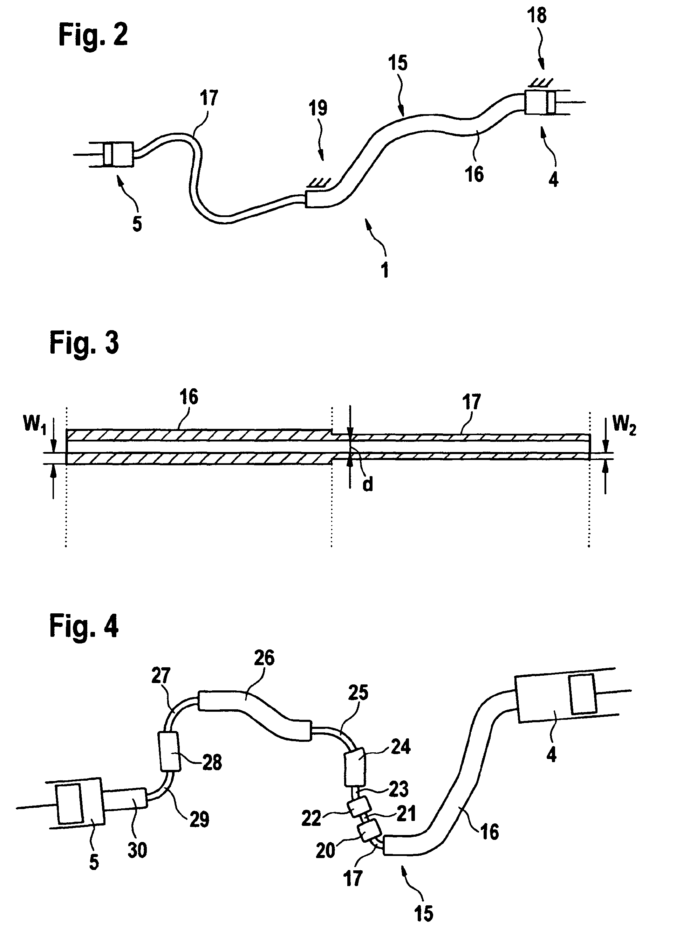

Fig. 2 zeigt ein hydraulisches System 1 mit einem Geberzylinder 4 und einem Nehmerzylinder 5 sowie eine diese verbindende Druckmediumsleitung 15 und einen mit dem Geberzylinder 4 über eine Nachlaufleitung 35 verbundenes Fluidreservoir 36. Die Druckmediumsleitung 15 besteht aus einem ersten karosseriefesten Abschnitt 16 sowie einem zweiten getriebefesten Abschnitt 17. Der karosseriefeste Einbau des ersten Abschnittes 16 ist durch je eine Lagerstelle 18 und 19 angedeutet. Der erste karosseriefeste Abschnitt 16 der Druckmediumsleitung 15 wird im Betrieb praktisch nicht bewegt, ist also im Wesentlichen starr innerhalb des Kraftfahrzeuges verlegt. Der zweite getriebefeste Abschnitt 17 wird im Betrieb verformt, der getriebefeste Nehmerzylinder 5 vollführt im Wesentlichen dieselben Bewegungen wie das Getriebe an sich, das mit Feder- und Dämpfungselementen in dem Fahrzeug gelagert ist. Dadurch wird der zweite getriebefeste Abschnitt 17 z.B. durch Vibration oder auch größere Bewegungsausschläge des Nehmerzylinders 5 gegenüber der Karosserie verformt. Der karosseriefeste Abschnitt 16 der Druckmediumsleitung 15 weist eine größere Wandstärke auf als der getriebefeste Abschnitt 17 und ist daher schwerer oder praktisch gar nicht verformbar, der getriebefeste Abschnitt 17 ist aufgrund seiner geringen Wandstärke leicht bzw. leichter verformbar. Durch die unterschiedlichen Wandstärken kann in dem Bereich, in dem die Druckmediumsleitung 15 im Betrieb durch Relativbewegung des Getriebes zur Fahrzeugkarosserie gebogen wird, eine entsprechend große Flexibilität der Druckmediumsleitung 15 erreicht werden und in Bereichen, in denen keine Biegung erfolgen muss eine hohe hydraulische Steifigkeit beibehalten werden.

Fig. 3 zeigt einen Teilschnitt durch eine Druckmediumsleitung 15. Dargestellt ist der erste karosseriefeste Abschnitt 16, der eine Wandstärke W₁ aufweist, sowie der zweite getriebefeste Abschnitt 17, der eine Wandstärke W₂ aufweist. Die Wandstärke W₁ ist größer als die Wandstärke W₂, entsprechend ist auch der Durchmesser des ersten Abschnittes 16 größer als der des zweiten Abschnittes 17. Der Innendurchmesser d sowohl des ersten als auch des zweiten Abschnittes 16, 17 ist in beiden Bereichen in etwa identisch. Die Druckmediumsleitung 15 kann beispielsweise einstückig in einem Extrusionsprozess hergestellt werden. Durch Eingriff in den Herstellungsprozess, z.B. durch Variation der Abzugsgeschwindigkeit, kann die Wandstärke gezielt gesteuert werden. Die Anzahl der Abschnitte ist beliebig, beträgt aber mindestens zwei Abschnitte.

Fig. 4 zeigt eine Druckmediumsleitung 15 mit einem ersten Abschnitt 16, einem zweiten Abschnitt 17 sowie weiteren Abschnitten 20 - 30. Die weiteren Abschnitte 20 - 30 können jeweils in ihren Außen- und Innendurchmessem dem ersten Abschnitt 16 bzw. dem zweiten Abschnitt 17 gleichen, sie können aber auch mit jeweils eigenständigen Wandstärken hergestellt worden sein. Vorteilhaft ist dabei jedoch, wenn der Innendurchmesser d sämtlicher Abschnitte 16, 17 sowie 20 -30 möglichst identisch ist. Durch abwechselnde Abschnitte mit großer bzw. kleiner Wandstärke ist es möglich, jeweils gelenkartige Bereiche in der Druckmediumsleitung 15 vorzusehen, in denen diese leicht zu bewegen ist und einer Knick- oder sonstigen Bewegung nur einen geringen Widerstand entgegensetzt, sowie andere Bereiche vorzusehen, in denen eine sehr große Steifigkeit gegenüber einer Aufweitung durch den Hydraulikdruck gegeben ist, so dass die gesamte Leitung insgesamt eine höhere Steifigkeit gegenüber einer Aufweitung durch den Innendruck besitzt, als dies bei Verwendung einer durchgehend dünnwandigen Druckmediumsleitung 15 der Fall wäre. Sowohl der erste Abschnitt 16 als auch der zweite Abschnitt 17 als auch die weiteren Abschnitte 20 - 30 können alternativ statt aus Kunststoff auch aus Metall oder Gummi oder dergleichen gefertigt sein. Insbesondere die Abschnitte, die nicht geknickt werden sollen, beispielsweise der zweite getriebefeste Abschnitt 17, können dabei beispielsweise aus Metall gefertigt sein. Die bevorzugte Ausführung sieht jedoch vor, die gesamte Druckmediumsleitung 15 aus jeweils einzelnen Abschnitten, die aus Kunststoff gefertigt sind und möglichst einteilig hergestellt sind, zu fertigen.

Die Druckmediumsleitung 15 gemäß Fig. 1 oder Fig. 2 bis Fig. 4 kann auch aus einem Verbundmaterial bestehen, das eine innere Schicht aus einem gegenüber Mineralölen und/oder Hydraulikflüssigkeiten inertem Material aufweist. Unter Verbundmaterial wird hier ein Schlauch- oder Rohrmaterial verstanden, das einen schichtartigen Aufbau besitzt. Die Schichten sind üblicherweise konzentrisch um die Mittelachse angeordnet. Da die innere Oberfläche der Druckmediumsleitung dauerhaft mit Mineralöl bzw. Hydraulikflüssigkeit in Kontakt kommt, ist es vorteilhaft oder gar unverzichtbar, dass diese Oberfläche zumindest über die geforderte Lebensdauer des hydraulischen Systems dem Mineralöl bzw. der Hydraulikflüssigkeit standhalten kann. Beispielsweise kann die innere Oberfläche aus einer dünnen Schicht einer PA-Folie bestehen. Die innere Oberfläche muss nicht notwendigerweise eine große mechanische Widerstandsfähigkeit aufweisen. Die Übertragung mechanischer Kräfte und insbesondere die Aufnahme der im inneren der Druckleitung auftretenden Druckkräfte kann durch eine weitere Schicht des Verbundmaterials, beispielsweise durch ein elastisches Material, erfolgen. In dem elastischen Material kann beispielsweise ein Material hoher Zugfestigkeit eingebettet sein, beispielsweise ein Gewebe wie ein Metallgewebe, ein Glasfasergewebe, ein Kohlefasergewebe oder ein Aramidfasergewebe oder dergleichen. Auf diese Weise erhält man einen mehrteiligen Aufbau, die innerste Schicht besteht aus der inerten Folie oder einem inerten Material, die weiter außen gelegene Schicht beispielsweise aus Gummi, daraufhin folgt eine Metall-, Glasfaser-, Kohlefaser- oder Aramidfasergewebeschicht, schließlich wird die äußere Schicht wieder durch beispielsweise eine Gummischicht oder dergleichen gebildet. Die zuvor genannten Fasergewebe bilden einen Druckträger, das Fasergewebe besitzt eine sehr hohe Zugbelastbarkeit und nimmt daher im Wesentlichen die aus dem Innendruck herrührenden Zugkräfte innerhalb der Druckmediumsleitung auf.

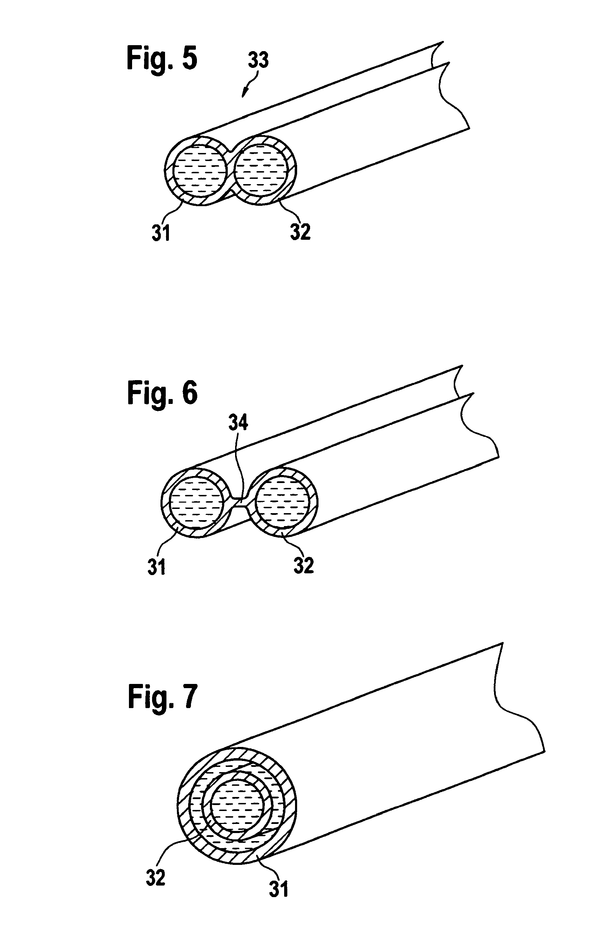

Die Figuren 5 bis 7 zeigen unterschiedliche Ausführungsbeispiele von Rohren, in denen jeweils ein Kraftübertragungsmedium geführt ist. Es kann sich hier beispielsweise um Druckmediumsleitungen eines hydraulischen Systems handeln, ebenso können in den Rohren aber auch Seilzüge entsprechend Bowdenzügen geführt sein. Derartige Rohre gelangen insbesondere zum Einsatz z.B. bei Doppelkupplungsgetrieben, bei denen mehrere Gebereinheiten mehrere Nehmereinheiten betätigen müssen, wobei die Gebereinheiten jeweils räumlich abgesetzt sind von den Nehmereinheiten. Die Gebereinheiten können beispielsweise mechanische Aktoren oder hydraulische Zylinder sein, die Nehmereinheiten können beispielsweise Nehmerzylinder oder entsprechende mechanische Elemente, die von einem Seilzug betätigt werden, darstellen. Statt einzelne Leitungen jeweils einzeln zu verlegen, können mit den in den Figuren 5 bis 7 dargestellten Ausführungsbeispielen jeweils zwei Leitungen in einem Arbeitsgang verlegt werden. Entsprechend ließen sich die Ausführungsbeispiele auch um weitere Leitungen erweitern. Fig. 5 zeigt ein Ausführungsbeispiel, bei dem zwei Hydraulikleitungen oder dergleichen gemeinsam z.B. in einem Extrusionsverfahren oder dergleichen hergestellt worden sind und insgesamt im Schnitt einen achtförmigen Querschnitt aufweisen. Ein erstes Rohr 31 und ein zweites Rohr 32 bilden so insgesamt eine Übertragungsrichtung 33, wobei jeweils das erste und das zweite Rohr 31, 32 eine Druckmediumsleitung eines hydraulischen Systems sein können. In Fig. 6 ist eine alternative Ausführungsform dargestellt, bei der das erste und zweite Rohr 31, 32 durch einen Steg 34 miteinander verbunden sind. In Fig. 7 schließlich ist eine alternative Ausführungsform dargestellt, bei der das erste Rohr 31 und das zweite Rohr 32 konzentrisch angeordnet sind. Die Anordnung erfolgt vorteilhafter Weise so, dass die Querschnittsflächen beider Rohre, mit anderen Worten die Flächen, durch die jeweils Hydraulikflüssigkeit strömen kann, in etwa gleich sind oder zumindest einen in etwa gleichen Fließwiderstand bzw. Druckabfall bei Durchströmung hervorrufen. Die Ausführungsformen nach Fig. 5 und Fig. 6 sind ebenfalls geeignet, um einen Draht oder dergleichen als direkte mechanische Übertragung zu führen, Fig. 7 kann sinnvoll nur im Zusammenhang mit hydraulischen Systemen eingesetzt werden.

### Bezugszeichenliste

- 1: Hydraulisches System
- 2: Steckverbindung
- 2a: Druckbegrenzungsventil
- 3: Kupplungsausrückvorrichtung
- 4: Geberzylinder
- 5: Nehmerzylinder
- 6: Ausrückmechanik
- 7: Kupplung
- 8: Brennkraftmaschine
- 9: Kurbelwelle
- 10: Getriebeei ngangswelle
- 11: erster Leitungsstrang
- 12: zweiter Leitungsstrang
- 13: mechanische Übertragung
- 14: Betätigungsglied
- 15: Druckmediumsleitung
- 16: Erster (karosseriefester ) Abschnitt
- 17: Zweiter (getriebefester) Abschnitt
- 18: Lagerstelle
- 19: Lagerstelle
- w₁: Wandstärke erster Abschnitt
- w₂: Wandstärke zweiter Abschnitt
- 20-30: Weitere Abschnitte
- 31: Erstes Rohr
- 32: Zweites Rohr
- 33: Übertragungseinrichtung
- 34: Steg
- 35: Nachlaufleitung

## Patentansprüche

1. Hydraulisches System (1) insbesondere für Kraftfahrzeuge, umfassend einen Geberzylinder (4), einen Nehmerzylinder (5) und eine diese verbindende Druckmediumsleitung (15), **dadurch gekennzeichnet, dass** die Druckmediumsleitung (15) aus mindestens zwei Abschnitten (16, 17, 20, 21, 22, 23, 24, 25, 26, 27, 28, 29, 30) mit unterschiedlichen Wandstärken besteht.

2. Hydraulisches System nach dem vorhergehenden Anspruch, **dadurch gekennzeichnet, dass** zumindest einige Abschnitte (16, 17, 20, 21, 22, 23, 24, 25, 26, 27, 28, 29, 30) aus Kunststoff bestehen.

3. Hydraulisches System nach einem der vorhergehenden Ansprüche, **dadurch gekennzeichnet, dass** die Abschnitte (16, 17, 20, 21, 22, 23, 24, 25, 26, 27, 28, 29, 30) einstückig gefertigt sind.

4. Hydraulisches System nach einem der vorhergehenden Ansprüche, **dadurch gekennzeichnet, dass** einige der Abschnitte (16, 17, 20, 21, 22, 23, 24, 25, 26, 27, 28, 29, 30) aus Kunststoff, einige aus Metall gefertigt sind.

5. Hydraulisches System nach einem der vorhergehenden Ansprüche, **dadurch gekennzeichnet, dass** die Innendurchmesser der Abschnitte (16, 17, 20, 21, 22, 23, 24, 25, 26, 27, 28, 29, 30) in etwa gleich sind.

6. Hydraulisches System nach einem der vorhergehenden Ansprüche, **dadurch gekennzeichnet, dass** die Außendurchmesser der Abschnitte (16, 17, 20, 21, 22, 23, 24, 25, 26, 27, 28, 29, 30) in etwa gleich und die Innendurchmesser verschieden sind.

7. Hydraulisches System mit einem Ausrücksystem nach einem der vorhergehenden Ansprüche, **dadurch gekennzeichnet, dass** die Übertragungseinrichtungen als Druckmediumsleitung (15), die Gebereinheiten als Geberzylinder (4) und die Nehmereinheiten als Nehmerzylinder (5) ausgeführt sind, wobei das Kraftübertragungsmedium ein Fluid ist.

## Claims

1. Hydraulic system (1), in particular for motor vehicles, comprising a master cylinder (4), a slave cylinder (5) and a pressure-medium line (15) connecting these, **characterized in that** the pressure-medium line (15) consists of at least two sections (16, 17, 20, 21, 22, 23, 24, 25, 26, 27, 28, 29, 30) having different wall thicknesses.

2. Hydraulic system according to the preceding claim, **characterized in that** at least some sections (16, 17, 20, 21, 22, 23, 24, 25, 26, 27, 28, 29, 30) consist of plastic.

3. Hydraulic system according to one of the preceding claims, **characterized in that** the sections (16, 17, 20, 21, 22, 23, 24, 25, 26, 27, 28, 29, 30) are manufactured in one piece.

4. Hydraulic system according to one of the preceding claims, **characterized in that** some of the sections (16, 17, 20, 21, 22, 23, 24, 25, 26, 27, 28, 29, 30) are manufactured from plastic and some are manufactured from metal.

5. Hydraulic system according to one of the preceding claims, **characterized in that** the inside diameters of the sections (16, 17, 20, 21, 22, 23, 24, 25, 26, 27, 28, 29, 30) are approximately identical.

6. Hydraulic system according to one of the preceding claims, **characterized in that** the outside diameters of the sections (16, 17, 20, 21, 22, 23, 24, 25, 26, 27, 28, 29, 30) are approximately identical and the inside diameters are different.

7. Hydraulic system having a disengagement system according to one of the preceding claims, **characterized in that** the transmission devices are designed as a pressure-medium line (15), the master units are designed as a master cylinder (4) and the slave units are designed as a slave cylinder (5), the force transmission medium being a fluid.

## Revendications

1. Système hydraulique (1), en particulier pour des véhicules automobiles, comprenant un maître-cylindre (4), un cylindre récepteur (5) et une conduite de milieu sous pression (15) reliant ces deux cylindres, **caractérisé en ce que** la conduite de milieu sous pression (15) se compose d'au moins deux portions (16, 17, 20, 21, 22, 23, 24, 25, 26, 27, 28, 29, 30) ayant des épaisseurs de paroi différentes.

2. Système hydraulique selon la revendication précédente, **caractérisé en ce qu'**au moins certaines portions (16, 17, 20, 21, 22, 23, 24, 25, 26, 27, 28, 29, 30) sont en plastique.

3. Système hydraulique selon l'une quelconque des revendications précédentes, **caractérisé en ce que** les portions (16, 17, 20, 21, 22, 23, 24, 25, 26, 27, 28, 29, 30) sont fabriquées d'une seule pièce.

4. Système hydraulique selon l'une quelconque des revendications précédentes, **caractérisé en ce que** certaines des portions (16, 17, 20, 21, 22, 23, 24, 25, 26, 27, 28, 29, 30) sont en plastique, et certaines en métal.

5. Système hydraulique selon l'une quelconque des revendications précédentes, **caractérisé en ce que** les diamètres intérieurs des portions (16, 17, 20, 21, 22, 23, 24, 25, 26, 27, 28, 29, 30) sont approximativement identiques.

6. Système hydraulique selon l'une quelconque des revendications précédentes, **caractérisé en ce que** les diamètres extérieurs des portions (16, 17, 20, 21, 22, 23, 24, 25, 26, 27, 28, 29, 30) sont approximativement identiques et les diamètres intérieurs sont différents.

7. Système hydraulique avec un système de débrayage selon l'une quelconque des revendications précédentes, **caractérisé en ce que** les dispositifs de transfert sont réalisés sous la forme d'une conduite de milieu sous pression (15), les unités donneuses sous la forme de maîtres-cylindres (4) et les unités réceptrices sous la forme de cylindres récepteurs (5), le milieu de transfert de force étant un fluide.
